# EUROPEAN PATENT APPLICATION

(11) **EP 3 660 970 A1**
(43) Date of publication of application: **03.06.2020**
(21) Application number: 18837930.9
(22) Date of filing: 24.07.2018
(51) Int. Cl.: H01M 10/056, H01M 10/052

(54) **ELECTROLYTE COMPOSITION, ELECTROLYTE FILM, AND CELL**

(30) Priority: 24.07.2017 JP 2017142512
(71) Applicant: Tokyo Metropolitan University, Tokyo 163-0926 (JP); 3Dom Inc., Yokohama-shi, Kanagawa 2210022 (JP)
(72) Inventor: KANAMURA Kiyoshi, Hachioji-shi Tokyo 192-0397 (JP); MUNAKATA Hirokazu, Hachioji-shi Tokyo 192-0397 (JP); KIMURA Takeshi, Hachioji-shi Tokyo 192-0397 (JP)
(74) Representative: Vossius & Partner Patentanwälte Rechtsanwälte mbB
(86) International application number: PCT/JP2018/027777
(87) International publication number: WO 2019/022095

(57) **Abstract**

An electrolyte composition characterized in comprising an electrolyte powder, a binder, and an ion-conductive material; the electrolyte powder being an oxide-based ceramic electrolyte powder; the binder being a polymer compound that is stable with respect to metal ions; the ion-conductive material being a solvated ion-conductive material or an ion-conductive solution having a metal ion-based compound. An electrolyte film characterized in being provided with an electrolyte powder and a composite material in which a binder and an ion-conductive material are made into a composite.

## Description

### [Technical Field]

The present invention relates to an electrolyte composition, an electrolyte film and a battery, and more particularly, to an electrolyte film of practical thickness, being superior in mechanical strength and exhibiting electrochemical properties, to an electrolyte composition that allows obtaining the electrolyte film, and to a battery.

### [Background Art]

Lithium secondary batteries, which have long life, high efficiency, and high capacity, are used as power sources for mobile phones, notebook computers, digital cameras and the like. Various studies have been conducted on electrolyte films that make up batteries, and in particular solid electrolytes are being developed.

As a solid electrolyte that allows preventing reactions between a composite metal oxide and water, and allows suppressing drops in cycle performance upon repeated charge and discharge, for instance PTL 1 proposes a solid electrolyte made up of a composite metal oxide of garnet-type structure, containing Li, La and Zr and having lithium ion conductivity, and a coating film containing lithium phosphate and which covers the surface of the composite metal oxide.

As a solid electrolyte material for secondary batteries, capacitors and gas sensors, PTL 2 proposes an ionic conductivity glass material having high ion conductivity and obtained by bringing together an ionic liquid and an ionic glass in which constituent component ions are present in the form of respective isolated ions, in accordance with a super rapid cooling method, and by compositing the foregoing through mixing while mechanical energy is imparted thereto at normal temperature.

As a safe solid electrolyte that allows a battery to operate stably over long periods of time, without a decrease in electrolyte derived from volatilization, PTL 3 proposes a lithium air battery having a structure in which a solid electrolyte is impregnated with an ionic liquid.

As an electrolyte film of an all-solid-state lithium secondary battery that is highly safe and exhibits superior charge and discharge cycle characteristics, PTL 4 proposes a solid electrolyte layer made up of a powder molded body resulting from molding a powder of a solid electrolyte, and in which a liquid substance that yields an electronic insulator through reaction with metallic lithium is present in gaps between powder particles of the powder molded body.

### [Citation List]

### [Patent Literature]

[PTL 1] Japanese Patent Application Publication No. 2015-176857
[PTL 2] Japanese Patent Application Publication No. 2006-156083
[PTL 3] Japanese Patent Application Publication No. 2014-82091
[PTL 4] Japanese Patent Application Publication No. 2009-211910

### [Summary of Invention]

### [Technical Problem]

To put into practice the above proposed solid electrolytes, however, it is necessary to make the solid electrolytes into a thin film to reduce actual resistance, but this has proved problematic in conventional art in that it is difficult to obtain a practical solid electrolyte thin film on account of the drop in mechanical strength of the solid electrolyte when made into a thin film.

In short, no solid electrolyte film has been thus far obtained that has a practical thickness, boasts superior mechanical strength, and has electrochemical properties.

Therefore, it is an object of the present invention to provide an electrolyte film of practical thickness, being superior in mechanical strength and exhibiting electrochemical properties, an electrolyte composition that allows obtaining the electrolyte film, and a battery obtained by using the electrolyte film.

### [Solution to Problem]

As a result of diligent research conducted with a view to solving the above problem, the inventors found that the problems can be solved by using a specific ionic liquid, and perfected the present invention by further working on that finding.

Specifically, the present invention provides each of the following inventions.
1. An electrolyte composition, containing:
   an electrolyte powder;
   a binder; and
   an ion-conductive material,
   wherein the electrolyte powder is an oxide-based ceramic electrolyte powder,
   the binder is a polymer compound that is stable towards metal ions, and
   the ion-conductive material is a solvated ion-conductive material or an ion-conductive solution including a metal ion compound.
2. The electrolyte composition set forth in 1,
   wherein the electrolyte powder, the binder and the ion-conductive material are contained in mixing ratios of 60 to 95 parts by weight of the electrolyte powder, 4 to 35 parts by weight of the binder, and 1 to 20 parts by weight of the ion-conductive material, for a total of 100 parts by weight.
3. The electrolyte composition set forth in 1,
   wherein the electrolyte powder, the binder and the ion-conductive material are contained in mixing ratios of 70 to 90 parts by weight of the electrolyte powder, 5 to 20 parts by weight of the binder, and 3 to 15 parts by weight of the ion-conductive material(total 100 parts by weight), for a total of 100 parts by weight.
4. The electrolyte composition set forth in 1,
   wherein the electrolyte powder is a garnet-type lithium ion conductive ceramic or a perovskite-type lithium ion conductive ceramic, and has an average particle size (median size D₅₀) of 0.1 to 20 µm.
5. The electrolyte composition set forth in 1,
   wherein the ion-conductive solution is an ion-conductive liquid resulting from dissolving an ionic compound in a solvent, the ionic compound is contained in a proportion of 0.5 to 5 mol/L, expressed as a concentration of the ionic compound in molar concentration with respect to the solvent.
6. The electrolyte composition set forth in 1,
   wherein when the electrolyte composition is mixed,
   a composite material of the binder and the ion-conductive material is formed between particles of the electrolyte powder,
   a melting point peak derived from the ion-conductive material disappears in a differential scanning calorimeter (DSC), and
   in NMR, peaks specific to the ion-conductive material for ⁷Li and ¹H shift towards a high magnetic field side with increasing mixing ratios of the ion-conductive material.
7. The electrolyte composition set forth in 1,
   wherein in a mixture resulting from mixing the electrolyte composition,
   a composite material of the binder and the ion-conductive material is formed between particles of the electrolyte powder, and
   the mixture has a conductivity of 10⁻⁶ S cm⁻¹ or higher, as measured in accordance with a conductivity measurement procedure below:
   a φ10 mm (0.785 cm²) Au collector was formed through sputtering on both faces of a composite electrolyte sheet, a resistance of the composite was measured in accordance with an AC impedance method in an argon atmosphere, and ion conductivity was calculated on the basis of a thickness of the sheet and an area of the Au collector; ionic conductivity σ is a reciprocal of resistivity ρ and obeys a relationship σ = 1/p; the resistivity p, together with electrolyte resistance R (Ω), electrolyte thickness t (µm) and electrode area A (cm²), obeys a relationship R = pt/A.
8. An electrolyte film, formed using the electrolyte composition of any one of 1 to 7, and containing an electrolyte powder and a composite material resulting from compositing a binder and an ion-conductive material.
9. The electrolyte film set forth in 8, wherein the composite material is present being mixed with the electrolyte powder throughout a thickness direction of the electrolyte film.
10. A battery, including the electrolyte film set forth in 8 or 9.

### [Advantageous Effects of Invention]

The electrolyte film of the present invention has practical thickness, boasts superior mechanical strength, and has electrochemical properties. Moreover, the electrolyte film has a composite material in close contact with an electrolyte powder, thanks to which the electrolyte film has high thermal stability and flexibility, and allows working a solid electrolyte into a thin film while maintaining mechanical strength, which was a problem in all-solid-state batteries having conventional solid electrolytes, thus making it possible to achieve a practical all-solid-state battery.

The electrolyte composition set forth in the present invention allows obtaining an electrolyte film having the above-described characteristics.

The battery of the present invention has sufficient battery characteristics, and is practical in terms of solving problems of all-solid-state batteries that utilize conventional solid electrolytes.

### [Brief Description of Drawings]

[Fig. 1] Fig. 1 is an enlarged cross-sectional diagram illustrating schematically one embodiment of an electrolyte film of the present invention.
[Fig. 2] Fig. 2 is a chart illustrating DSC measurement results of electrolyte films obtained in Examples, and of an ionic liquid.
[Fig. 3] Fig. 3 is a set of charts illustrating NMR measurement results of electrolyte films obtained in Examples, and of an ionic liquid.
[Fig. 4] Figs. 4(a) to 4(c) are photographs (photographs substituting for drawings) illustrating cross-sectional observation results by FIB-SEM, of electrolyte films obtained in Examples 1 and 2 and a comparative example.
[Fig. 5] Fig. 5 are photographs (photographs substituting for drawings) illustrating results of EDS mapping.
[Fig. 6] Fig. 6 is a chart illustrating electrical characteristics of electrolyte films obtained in Examples.
[Fig. 7] Fig. 7 is a chart illustrating dissolution/precipitation behavior of metallic lithium in electrolyte films obtained in Examples.
[Fig. 8] Fig. 8 is (a) an overview diagram illustrating a battery produced using an electrolyte film obtained in an Example, and (b) a chart illustrating a battery characteristic thereof.
[Fig. 9] Fig. 9 is a chart illustrating battery characteristics of an air battery obtained in an Example.
[Fig. 10] Fig. 10 is a chart illustrating an electrical characteristic of an electrolyte film obtained in Example 4.
[Fig. 11] Fig. 11 is a chart illustrating dissolution/precipitation behavior of metallic lithium in an electrolyte film obtained in Example 4.
[Fig. 12] Figs. 12(a) and 12(b) are charts illustrating the charge and discharge capacity of a battery that utilizes an electrolyte film obtained in Example 4.
[Fig. 13] Fig. 13 is a chart illustrating DSC data of electrolyte films of Examples 4 to 6 and Reference example 2.
[Fig. 14] Figs. 14(a) and 14(b) are charts illustrating NMR data of electrolyte films obtained in Examples 4 to 7 and Reference example 2.
[Fig. 15] Fig. 15 is a chart illustrating DSC data of an electrolyte film of a reference example.
[Fig. 16] Fig. 16 is a chart illustrating NMR data of an electrolyte film of a reference example.

### [Description of Embodiments]

The present invention will be explained in detail below.

### <Electrolyte composition>

The electrolyte composition set forth in the present invention is made up of an electrolyte powder, a binder and an ion-conductive material;
the electrolyte powder is an oxide-based ceramic electrolyte powder;
the binder is a polymer compound that is stable towards metal ions; and
the ion-conductive material is a solvated ion-conductive material or an ion-conductive solution, having a metal ionic compound.

The various components will be explained next.

### (Electrolyte powder)

The electrolyte powder is an oxide-based ceramic electrolyte powder, specific examples of which include for instance garnet-type lithium ion conductive ceramics such as Li₇La₃Zr₂O₁₂ (LLZ) and perovskite-type lithium ion conductive ceramics such as Li₃xLa_{(2/3-X)}TiO₃ (LLT) . The crystal system of the electrolyte powder may be any from among cubic, hexagonal, trigonal, tetragonal, orthorhombic, monoclinic and triclinic systems. The crystal system is particularly preferably cubic, since in that case a sintering treatment need not be carried out in the production of the electrolyte film.

The average particle size (median size D₅₀) of the electrolyte powder is preferably 0.01 to 50 µm, more preferably 0.1 to 20 µm. A known pulverizer or classifier is used in order to obtain a predetermined average particle size. For example, a mortar, a ball mill, a sand mill, a vibrating ball mill, a satellite ball mill, a planetary ball mill, a swirling airflow-type jet mill or a sieve is preferably used herein.

The average particle size can be measured in accordance with an ordinary known method, but is specifically measured in accordance with the method set out below.

For instance, a measurement in accordance with a dynamic light scattering (DLS) method, or based on visual observation relying on for instance a visual measurement or image processing of an observed image of a scanning electron microscope (SEM).

Most preferably, in the present invention the electrolyte powder is a garnet-type lithium ion conductive ceramic or a perovskite-type lithium ion conductive ceramic, and has an average particle size (median size D₅₀) of 0.1 to 20 µm.

### (Binder)

More preferably, the polymer compound used as the binder is a polymer compound that is stable towards metallic lithium, and is not very compatible with the electrolyte powder. Preferred examples of the polymer compound include fluororesins such as polytetrafluoroethylene (PTFE) and polyvinylidene fluoride (PVDF); as well as polyethylene (PE), polypropylene (PP), carboxymethyl cellulose (CMC), styrene butadiene rubber (SBR), polyvinyl butyral (PVB), acrylic resins and elastomer resins. Such a polymer compound is preferred in that only the outermost surface of for instance resin particles made up of the polymer compound reacts with metallic lithium, but the reaction does not proceed any further, and terminates just at the outermost surface. In some instances, the polymer compound may be difficult to mix in, depending on the combination of the ion-conductive material and the binder that are used; a surfactant is preferably used in such cases. Examples of the surfactant used at that time include a fatty acid dispersant (reagent special grade, product name "Stearic Acid", by FUJIFILM Wako Pure Chemical Corporation), by Chukyo Yushi Co., Ltd. A particularly preferred instance of the use of such surfactant is a case where the above elastomer resin is used. Examples of the elastomer resin that can be used at that time include styrenic elastomers (for instance product name "U-507" by Chukyo Yushi Co., Ltd.). The amount of the surfactant contained in a case where such an elastomer resin is used is preferably 1 to 10 parts by weight relative to 100 parts by weight of the total amount of the elastomer resin and the surfactant.

The number-average molecular weight of the polymer compound is preferably 1000 to 100,000,000, and the degree of dispersion thereof is preferably 1 to 50.

### (Ion-conductive material)

The ion-conductive material is the solvated ion-conductive material or the ion-conductive solution.

### • Solvated ion-conductive material

The solvated ion-conductive material results from mixing a solute such as a solvent or a gas, and an ionic compound which is a metal ionic compound. Preferred among the foregoing are solvated ion-conductive liquids, and in a case where a solvent is used as a solute, preferably the solvent evaporates upon breakdown of a complex formation state. A solvated ion-conductive liquid will be explained next.

Examples of the solvent that makes up the solvated ion-conductive liquid include triglyme (G3) and tetraglyme (G4) represented by the chemical formulae below.

Examples of the ionic compound include lithium bistrifluoromethanesulfonylamide (LiTFSA), lithium bisfluoromethanesulfonylamide (LiFSA), lithium perchlorate (LiClO₄) and lithium hexafluorophosphate (LiPF₆) represented by the chemical formulae below.

The solvated ion-conductive liquid is an ionic liquid that contains a salt and a solvent that coordinates strongly with the cation or anion that makes up the salt, as in the chemical formulae given below. Examples include for instance [Li(G3)][TFSA] (a solvated ion-conductive liquid of G3 and LiTFSA will be notated in this way; likewise hereafter), [Li(G4)][TFSA] and the like, and also [Li(G3)][FSA], [Li(G4)][FSA] and, as highly concentrated electrolyte solution, LiTFSA/DME (which denotes a solution in which LiTFSA is dissolved to saturation in DME described below as a solvent; likewise hereafter), LiTFSA/AN, LiTFSA/DME, LiTFSA/DMSO, LiFSA/DME, LiFSA/AN, LiFSA/DME and LiFSA/DMSO.

Preferably, the solvent and the ionic compound in the solvated ion-conductive liquid are contained so that the amount of the ionic compound is an equimolar or greater relative to the solvent, or so that the resulting solution is saturated.

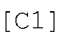

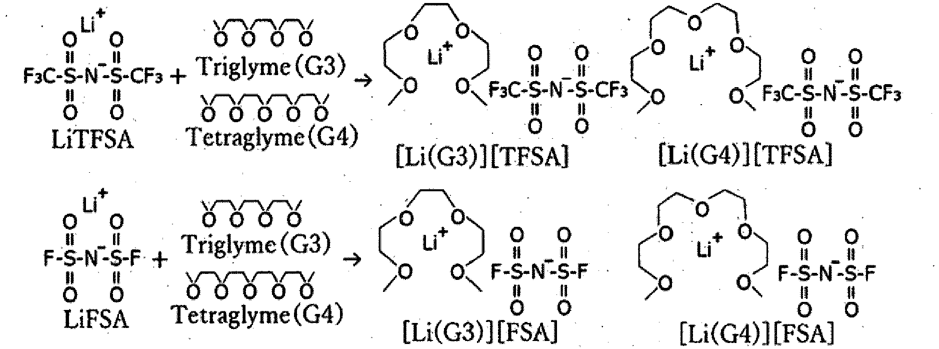

The above solvated ion-conductive liquids have a nature similar to that of ionic liquids, and are advantageous in that, for instance, the oxidation stability of the solvent such as a glyme is increased by virtue of the electric field effect of Li⁺, and in that the performance from the weakly coordinated constituent ions is brought out and there are elicited specific electrode reactions on account of low solvent activity.

### • Ion-conductive solution

The ion-conductive solution is obtained through mixing of an ionic compound and a solvent described below, such that the ionic compound and the solvent form complexes. Examples of the solvent used herein include aprotic organic solvents. Specific examples thereof include dimethyl ether (DME), ethylene carbonate (EC) and polyethylene carbonate (PC), vinylene carbonate (VC), vinyl ethylene carbonate (VEC), fluoroethylene carbonate (FEC), dimethyl carbonate (DMC), diethyl carbonate (DEC), ethyl methyl carbonate (EMC), acetonitrile (AN), dimethyl sulfoxide (DMSO), tetrahydrofuran (THF), diethyl ether, 1,2-dimethoxyethane and methyl sulfolane. The foregoing can be used as single solvents or as mixed solvents of two or more types.

Examples of the ionic compound include cationic species compounds and anionic species compounds.

Examples of cationic species of cationic species compounds include imidazolium-based ones (1-ethyl-3-methyl imidazolium (EMI⁺), 1-butyl-3-methyl imidazolium (BMI⁺), 1,2-dimethyl-3-propyl imidazolium (DMPI⁺) and the like); ammonium-based ones (N-butyl-N,N,N-trimethyl ammonium ([N₁₁₁₄]⁺), N,N,N,N-tetraethyl ammonium ([N₂₂₂₂]⁺), N,N,N,N-tetrabutyl ammonium ([N₄₄₄₄]⁺) and the like); pyridinium-based ones (butyl pyridinium (BP⁺), 1-butyl-3-methyl pyridinium and the like); pyrrolidinium-based ones (1-butyl-1-methyl pyrrolidinium (BMP⁺), 1-ethyl-1-methyl pyrrolidinium and the like); piperidinium-based ones (1-methyl-1-propyl piperidinium (PP13⁺) and the like); phosphonium-based ones (tetrabutyl phosphonium and tributyl dodecyl phosphonium); and morpholinium-based ones (4-(2-ethoxyethyl)-4-methyl morpholinium and the like).

Examples of anionic species of anionic species compound include PF₆⁻, BF₄⁻, AsF₆⁻, CH₃COO⁻, CH₃SO₃⁻, N(CN)₂⁻, NO₃⁻ ClO₄⁻, F⁻, Cl⁻, Br⁻, I⁻, trifluoromethyl sulfonate ([TfO]⁻), trifluoroacetate ([TFA]⁻), N(SO₂F)₂⁻(FSA⁻), N(SO₂CF₃)₂⁻(TFSA⁻) and the like. These ionic compounds can be used in the form of single solvents or in the form of mixed solvents of two or more types.

Examples of the ionic compound include lithium bistrifluoromethanesulfonylamide (LiTFSA), lithium bisfluoromethanesulfonylamide (LiFSA), lithium perchlorate (LiClO₄), lithium hexafluorophosphate (LiPF₆), lithium chloride (LiCl), lithium fluoride (LiF) and lithium borofluoride (LiBF₄), as well as for instance compounds having the above cationic species.

The ionic compound is contained preferably in a proportion of 0.5 to 5 mol/L, more preferably 1 to 2 mol/L in molar concentration relative to the solvent, and can be contained in an amount that yields a saturated solution.

Specific examples of the ion-conductive solution, when an aprotic organic solvent is used, include ion-conductive solutions in which LiPF₆ at a concentration of 1 mol/L is dissolved in a PC single solvent, or in a mixed solvent of EC:DEC at a volume ratio of 1:1, a mixed solvent of EC:DEC at a volume ratio of 1:2, a mixed solvent of EC:DEC at a volume ratio of 3:7, a mixed solvent of EC:EMC at a volume ratio of 1:1, a mixed solvent of EC:EMC at a volume ratio of 3:7, a mixed solvent of EC:PC at a volume ratio of 1:1, a mixed solvent of EC:PC at a volume ratio of 3:7, a mixed solvent of EC:DMC:DEC at a volume ratio of 1:1:1, or a mixed solvent of EC:PC:EMC at a volume ratio of 1:1:1;
ion-conductive solutions in which LiBF₄ at a concentration of 1 mol/L is dissolved in a PC single solvent, or in a mixed solvent of EC:DEC at a volume ratio of 1:1, a mixed solvent of EC:DMC at a volume ratio of 1:1, a mixed solvent of EC:EMC at a volume ratio of 1:3, or a mixed solvent of EC:PC at a volume ratio of 1:1;
ion-conductive solutions in which LiCF₃SO₄ at a concentration of 1 mol/L is dissolved in a PC single solvent, or in a mixed solvent of EC:DEC at a volume ratio of 1:1;
ion-conductive solutions in which LiTFSA at a concentration of 1 mol/L is dissolved in a PC single solvent, or in a mixed solvent of EC:DEC at a volume ratio of 1:1, a mixed solvent of EC:DMC at a volume ratio of 1:1, a mixed solvent of EC:DMC at a volume ratio of 1:1, or a mixed solvent of EC:EMC at a volume ratio of 3:7; and
ion-conductive solutions in which LiTFSA at a concentration of 2 mol/L is dissolved in a mixed solvent of EC:DMC at a volume ratio of 1:1. An ion-conductive solution can be used that results from dissolving an ionic compound obtained by combining an arbitrary ion source and arbitrary anions and cations, for instance BMI and TFSA, BMP and TFSA, BMP and BF₄, BMP and PF₆, EMI and Cl, PP13 and TFSA, or N₁₁₁₄ and TFSA (molar ratio: 1/1), in the above-described single solvent or mixed solvents, in the concentrations described above. In the present description such combinations will be notated for instance as EMITFSA.

The ion-conductive material may be used as a single type alone, or in the form of mixtures of two or more types.

### (Mixing ratios)

In the electrolyte composition of the present invention, preferably the electrolyte powder, the binder and the ion-conductive material are contained in mixing ratios of 60 to 95 parts by weight of the electrolyte powder, 4 to 35 parts by weight of the binder, and 1 to 20 parts by weight of the ion-conductive material (with respect to a total of 100 parts by weight), more preferably 70 to 90 parts by weight of the electrolyte powder, 5 to 20 parts by weight of the binder, 3 to 15 parts by weight of the ion-conductive material (with respect to a total of 100 parts by weight), and preferably 70 to 85 parts by weight of the electrolyte powder, 10 to 20 parts by weight of the binder and 5 to 10 parts by weight of the ion-conducting material (with respect to a total of 100 parts by weight). Preferably, the mixing ratios of the binder and the ion-conductive material contained are adjusted so as to satisfy the below-described amounts of composite materials contained.

The above mixing ratios lie preferably within the ranges above, since outside the above ranges the desired effect cannot be achieved.

The electrolyte composition set forth in the present invention can be used for instance in the below-described electrolytefilm of the present invention.

When the electrolyte composition of the present invention is mixed, a composite material of the binder and the ion conductive material becomes formed between particles of the electrolyte powder. Controlling this relies on evidence from the fact that in a differential scanning calorimeter (DSC), a melting point peak derived from the ion-conductive material disappears, and that in NMR, peaks specific to the ion-conducting material for ⁷Li and ¹H shift towards a high magnetic field side with increasing content of the ion-conductive material. Although in some instances it cannot be asserted that a clear shift to the high magnetic field side is observed in NMR, the above is substantiated by virtue of the fact that in these cases as well the half width of the NMR peaks is 1.25 ppm or greater, i.e. is ordinarily different from values of half width of peaks specific to the ion-conducting material.

The term "disappear" includes both complete disappearance of peaks, and also weakening of peak intensity in mixing ratio to the amount contained. In the present description, an instance where "a DSC peak disappears" has the same meaning. The degree of weakening varies depending on the type of the binder and ionic liquid used, and on the production method.

Conductivity of a mixture obtained by mixing of the electrolyte composition of the present invention, and measured in accordance with the conductivity measurement procedure below, is preferably 10⁻⁶ S cm⁻¹ or higher, although varying depending on the ion-conductive material that is used.

The above conductivity can be measured as described below.

Conductivity measurement procedure: a φ10 mm (0.785 cm²) Au collector was formed through sputtering on both faces of a sheet formed using an electrolyte composition, the resistance of the composite was measured in accordance with an AC impedance method in an argon atmosphere, and ion conductivity was calculated on the basis of a thickness of the sheet and an area of the Au collector. Ionic conductivity σ is a reciprocal of resistivity ρ and obeys a relationship σ = 1/p. The resistivity p, together with electrolyte resistance R (Ω), electrolyte thickness t (µm) and electrode area A (cm²), obeys the relationship R = pt/A.

Impedance was measured, as an electrochemical property, in the Examples, under measurement conditions that included a frequency range of 0.1 to 3,000,000 Hz, a temperature condition of room temperature, and applied voltage of 50 mV, using a high-performance electrochemical measurement system, product name "SP-200", by Bio-Logic SAS (France), as the measuring device. Measurement data at 60°C may also be illustrated, as a reference.

Regarding the composite material, the shift of the NMR peaks of the composite materials, and the feature wherein conductivity lies within a specific range, are features involving structures and properties ordinarily encountered in molding of an electrolyte composition to yield an electrolyte film, and hence will be described in detail in the explanation about the electrolyte film.

### <Electrolyte film>

The electrolyte film of the present invention is characterized by containing an electrolyte powder and a composite material resulting from compositing a binder and an ion-conductive material.

The electrolyte powder, the binder and the ion-conductive material are identical to those described concerning the above electrolyte composition, and hence an explanation thereof will be omitted herein. Specifically, the electrolyte film of the present invention is preferably obtained from the above-described electrolyte composition of the present invention.

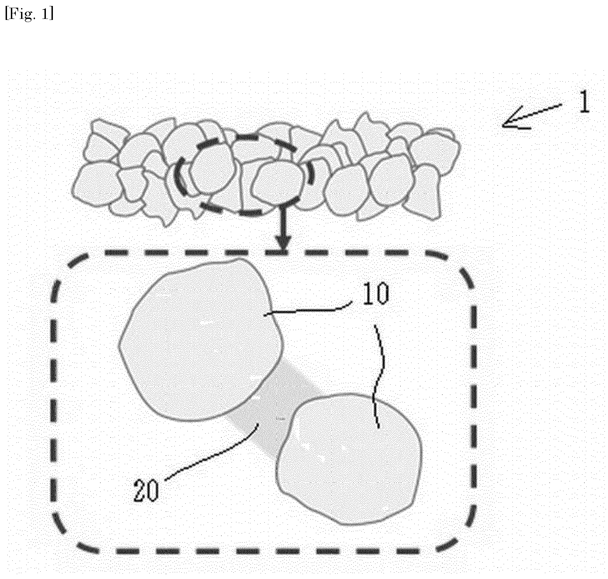

The electrolyte film of the present embodiment will be explained with reference to Fig. 1.

As illustrated in Fig. 1, the electrolyte film 1 of the present embodiment is made up of an electrolyte powder 10 and a composite material 20 positioned between particles of the electrolyte powder 10.

The electrolyte powder of the electrolyte film is an electrolyte substance of so-called powdery form; concrete examples of the components of the electrolyte powder include for instance components of the electrolyte powder explained in the section relating to the above-described electrolyte powder. The particle size of the electrolyte powder in the electrolyte film is identical, as average particle size, to the particle size of the above-described electrolyte powder.

The composite material 20 does not change chemically as a result of compositing of the ion-conductive material and the binder (i.e. no chemical change can be observed in a chemical analysis), but exhibits however changes in terms of physical properties, that is, on account of interactions between the ion-conductive material and the binder, the physical properties of the composite material differ from the physical properties that are obtained simply by combining the both components. By virtue of the presence of such a composite material, higher ion conductivity is exhibited than that derived from simply having an ion-conductive material, and also electrochemical properties are enhanced as a result.

In a differential scanning calorimeter (DSC), for instance, a melting point peak derived from the ion-conductive material present in the electrolyte film disappears, and thus the above-described conductivity is preferably 10⁻⁶ S cm⁻¹ or higher. That is, a melting point peak derived from the ion-conductive material present in the electrolyte film of the present invention disappears in a differential scanning calorimeter (DSC). In the electrolyte composition of the present invention the melting point peak derived from the ion-conductive material disappears at the time of mixing of the electrolyte composition.

In NMR, the peaks specific to the ion-conducting material shift towards the high magnetic field side, both for ⁷Li and for ¹H, with increasing content of the ion-conductive material. Ordinarily the peaks appear at a same position, unless there is a change in chemical structure. However, the electrolyte film of the present invention resulting from mixing of the electrolyte composition of the present invention has a characteristic whereby although without changes in the chemical structure, the physical properties alone of the electrolyte film do change in that peak positions shift towards the high magnetic field side accompanying an increase in the ratio of the ion-conductive material. Although in some instances it cannot be asserted that a clear shift to the high magnetic field side is observed in NMR, in this case as well, the half width of the NMR peaks is 1.25 ppm or greater, i.e. is ordinarily different from values of half width of peaks specific to the ion-conducting material.

The reasons whereby physical properties change thus upon formation of a composite material are uncertain, but it is deemed that some morphological change (not a chemical change, but a rheological change) occurs in the ion-conductive material as a result of compositing of the ion-conductive material by being taken up into the binder.

In the electrolyte film of the present invention, the electrolyte powder and the composite material (i.e. of a composite product of the binder and the ion-conductive material) are contained preferably in mixing ratios of 60 to 95 parts by weight of the electrolyte powder and 5 to 40 parts by weight of the composite material, for a total of 100 parts by weight, and more preferably 70 to 90 parts by weight of the electrolyte powder and 10 to 30 parts by weight of the composite material, for a total of 100 parts by weight.

As illustrated in Fig. 1, in the electrolyte film of the present embodiment, the composite material is present in a mixture with the electrolyte powder throughout a thickness direction of the electrolyte film. The wording "throughout a thickness direction" signifies that, in the case of an aggregation of the electrolyte powder, the composite material is present so as to fill up voids that are present between electrolyte powder particles and that are formed throughout the film. The ratio of the composite material present is determined by the mixing proportion and by the electrolyte powder that is used.

The battery characteristic of a battery that utilizes the electrolyte film of the present invention is about 3 to 4 V in the case where lithium or graphite is used in the negative electrode, about 3.5 V in the case of silicon, and about 2 V in the case of lithium titanate (LTO). Power density is 400 to 1000 W kg⁻¹.

Preferably the thickness of the electrolyte film in the present embodiment is 10 to 500 µm. The shape of the electrolyte film is not particularly limited, and the electrolyte film may take on various forms.

Additive components that are ordinarily used in this type of electrolyte films, other than the above-described components, can be added as appropriate to the electrolyte film of the present invention, in amounts such that the desired effect of the present invention is not impaired.

### <Production method>

The electrolyte film of the present invention can be produced by performing a first mixing step of mixing the electrolyte powder and the ion-conductive material, to obtain a first mixture; and
a second mixing step of adding the binder to the first mixture, and mixing, to obtain a second mixture.

It is deemed that the above-described composite material becomes formed, and good electrolyte characteristics are brought out, by performing thus a first mixing step and a second mixing step.

### • Second method

Otherwise, a desired molded product (for instance a sheet-shaped product) may be obtained through molding of a mixture resulting from mixing the electrolyte powder and the binder, whereupon the obtained molded product is immersed in the ion-conductive material, as-is, or in a solution of the ion-conductive material. Water or the like may be used as the solvent used in a solution of the ion-conductive material inthat case. The immersion temperature is not particularly limited, and may be normal temperature; likewise, the immersion time is not particularly limited, and may range for instance from 30 minutes to 24 hours.

### (First mixing step)

The first mixing step can be accomplished through mixing of the electrolyte powder and the ion-conductive material. The mixing method is not particularly limited, and mixing can be accomplished in accordance with various methods. Mixing can be performed with the temperature lying in the range of normal temperature to 150°C, and the stirring speed may be set to 400 to 3000 rpm, and the mixing time may be set to 5 to 60 minutes.

### (Second mixing step)

The second mixing step can be accomplished through mixing of the first mixture obtained in the first mixing step, and the binder. The mixing method is not particularly limited herein, and mixing can be accomplished in accordance with various methods. Mixing can be performed with the temperature lying in the range of normal temperature to 150°C, and the stirring speed may be set to 400 to 3000 rpm, and the mixing time may be set to 5 to 60 minutes.

### (Other steps)

In the present invention, the above-described first and second mixing steps are carried out depending on the electrolyte powder that is used, after which a desired electrolyte film can be obtained through molding the obtained second mixture to a predetermined shape; however, a firing step or the like may be further performed, depending on the electrolyte powder that is used.

The firing step involves preferably firing at a temperature of 500°C to 1500°C for 0.5 to 48 hours.

In addition, other steps can be adopted that are ordinarily utilized to produce an ordinary electrolyte film, so long as the purport of the present invention is not departed from.

### <Method of use/battery>

The electrolyte film of the present invention can be used as an electrolyte film of a lithium ion battery, preferably an all-solid-state battery. Specifically, the battery of the present invention is obtained using the above-described electrolyte film of the present invention. The battery structure is not particularly limited, and a conventionally known electric structure can be adopted as the battery structure.

### <Effect>

The electrolyte film of the present invention has flexibility and mechanical strength, and can be made into a thin film. Further, Li⁺ ions move within the electrolyte powder and through the ion-conductive material in the composite material, and hence sufficient ion conduction paths are present, and a superior battery characteristic is elicited.

From the above standpoints, the electrolyte film of the present invention is useful as an electrolyte film of a lithium ion battery, in particular an all-solid-state lithium ion battery.

### Examples

The present invention will be explained in concrete terms below by way of Examples and comparative examples, but the invention is not meant to be limited to these examples in any way.

### [Example 1]

Herein there were prepared an LLZ powder (cubic particles, median size D₅₀ = 11 µm, product name "DLZ-2,3" by Daiichi Kigenso Kagaku Kogyo Co., Ltd.), a PTFE powder (average particle size 300 to 600 µm, product name "PTFE6-J", by Du Pont-Mitsui Fluorochemicals Co., Ltd., average molecular weight from 100,000 to 100,000,000) and a solvated ion-conductive material (hereafter simply referred to as "ionic liquid" in the Examples) (solvated ionic liquid [Li(G4)][FSA] resulting from mixing of LiFSA as a lithium ionic compound with G4 (tetraglyme) as a solvent, in a molar ratio of 1:1) as an ion-conductive material.

Next, the LLZ powder and the ionic liquid were mixed so that the mixing ratio therebetween was 87:3 in ratio by weight, and were mortar-mixed to yield a mixture (first mixing step).

Then the PTFE powder was mixed with the obtained mixture in an amount of 10 parts by weight with respect to 87 parts by weight of the LLZ powder, and the whole was kneaded in the same way as above (second mixing step), to yield an electrolyte composition.

A flexible sheet (thickness 250 to 350 µm) was produced by roll pressing using the obtained electrolyte composition, while under application of a load of 0.5 to 4 kN, to yield an electrolyte film.

### [Example 2]

An electrolyte composition and an electrolyte film (thickness 250 to 350 µm) were obtained in the same way as in Example 1 but herein mixing was performed with a mixing ratio of LLZ powder and [Li(G4)][FSA] contained set to 81:10 as a ratio by weight, and with the mixing ratio of the PTFE powder contained set to 9 parts by weight with respect to 81 parts by weight of LLZ powder.

### [Example 3]

Herein an LLZ-PTFE mixed green sheet was obtained through mixing and kneading of an LLZ powder and a PTFE powder, at a mixing ratio of 90:10 in ratio by weight, to a shape sheet, and the resulting sheet was roll-pressed while under application of a load of 0.5 to 4 kN. Thereafter an Au film was formed by Au sputtering, as a collector, on the green sheet, after which the green sheet was immersed for 6 hours in the same ionic liquid as that used in Example 1, to be impregnated with the ionic liquid by evacuation, and yield an electrolyte film with collector (thickness 250 to 350 µm).

The obtained electrolyte film contained 8 parts by weight of the ionic liquid with respect to 100 parts by weight of the green sheet. Thus in the present Example, the mixing ratios were LLZ powder:PTFE powder:ionic liquid = 83.3:9.3:7.4 (parts by weight).

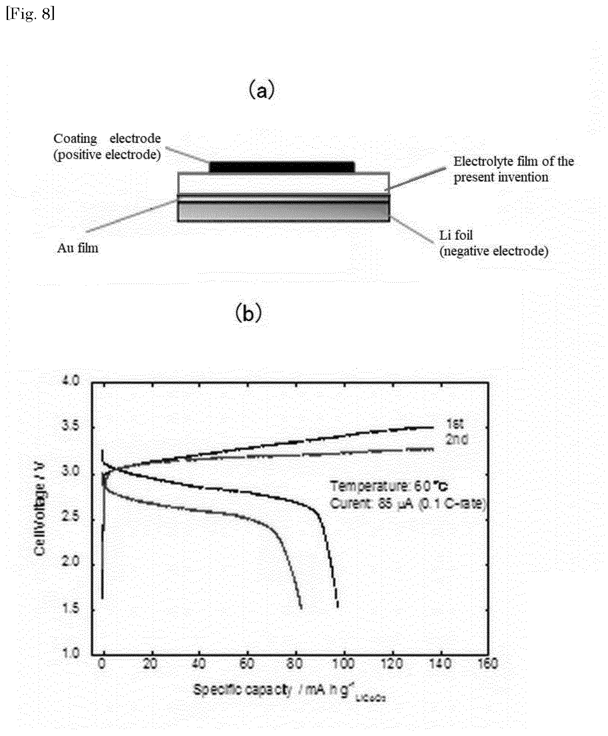

In the production of cells for impedance measurement and for a metallic lithium dissolution/precipitation test, the Au film was attached to both faces of the green sheet, on the negative electrode side and the positive electrode side, but in the case of production of a cell for battery testing the Au film was attached to only the negative electrode side (implementation in Fig. 8(a)).

### [Comparative example 1]

Herein a PTFE powder was mixed, in an amount of 10 parts by weight with respect to 90 parts by weight of an LLZ powder, without addition of an ionic liquid, and only the second mixing step was carried out, to yield an electrolyte composition and an electrolyte film.

### [Test examples]

The following tests were performed on each obtained electrolyte film.

### [Differential scanning calorimeter (DSC) measurement]

A melting point peak of the ionic liquid present in the electrolyte film was checked, to assess the manner in which the ionic liquid was present in the electrolyte film.

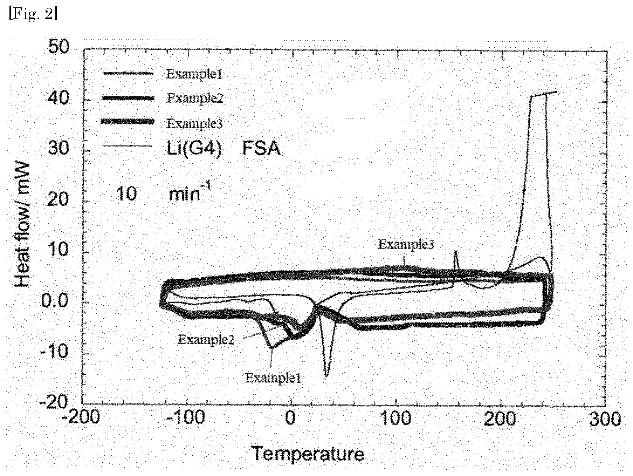

Measurements were performed using product name "DSC-60" by Shimadzu Corporation, as a differential scanning calorimeter, the measurement being initiated at around room temperature, with cooling down to a temperature of -130°C, after which heating was performed up to about 250°C, followed by cooling down to room temperature, with the measurement being continuously performed all the while. The cooling and heating rates were set to 10°C/minute. The results are illustrated in Fig. 2. Also a chart of the ionic liquid ([Li(G4)][FSA]) itself is depicted in Fig. 2, for comparison.

As the results in Fig. 2 reveal, no peaks derived from the melting point of the ionic liquid could be observed in the electrolyte films of Examples 1 and 2. This indicates that in the electrolyte film of the present invention the ionic liquid is not present as-is, but is present in a state where the ionic liquid is present composited with the binder and adsorbed on the surface of the electrolyte powder, such that the ionic liquid interacts with the electrolyte powder.

Also in the electrolyte film obtained in Example 3 it was found that no peak derived from the ionic liquid could be observed, and that the ionic liquid was adsorbed on the solid electrolyte powder and the binder.

### [Checking of changes in physical properties by NMR]

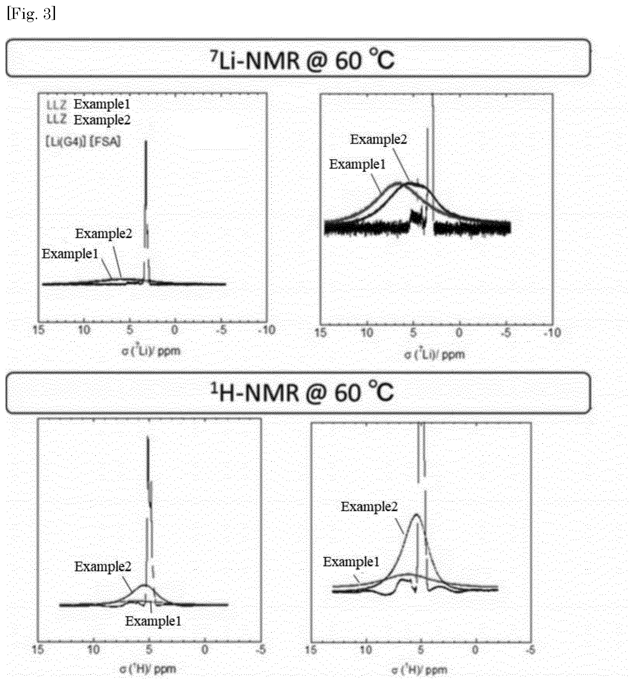

Peaks derived from the ionic liquid present within the electrolyte film were checked, to thereby assess the manner in which the ionic liquid was present in the electrolyte film. In particular the relaxation time, self-diffusion coefficient and signals for ⁷Li were checked. The measurements were performed in accordance with ordinary methods, using product name "JNM-500" by JEOL Ltd. The results are illustrated in Fig. 3.

As the results in Fig. 3 reveal, the electrolyte films in Examples 1 and 2 exhibited a peak shift towards the high magnetic field side accompanying an increase of the ratio of the ionic liquid, both for ⁷Li and for ¹H. Accordingly, this indicates that in the electrolyte film of the present invention a state is brought about in which the ionic liquid is not present as-is, but is present in the vicinity of the electrolyte powder in a state of being composited with the binder, so that the electrolyte film exhibits new conduction paths.

### [Observation of cross sections of solid-liquid composite electrolytes using orthogonal-type focused-ion-beam processing and observation device/scanning electron microscope (FIB-SEM)]

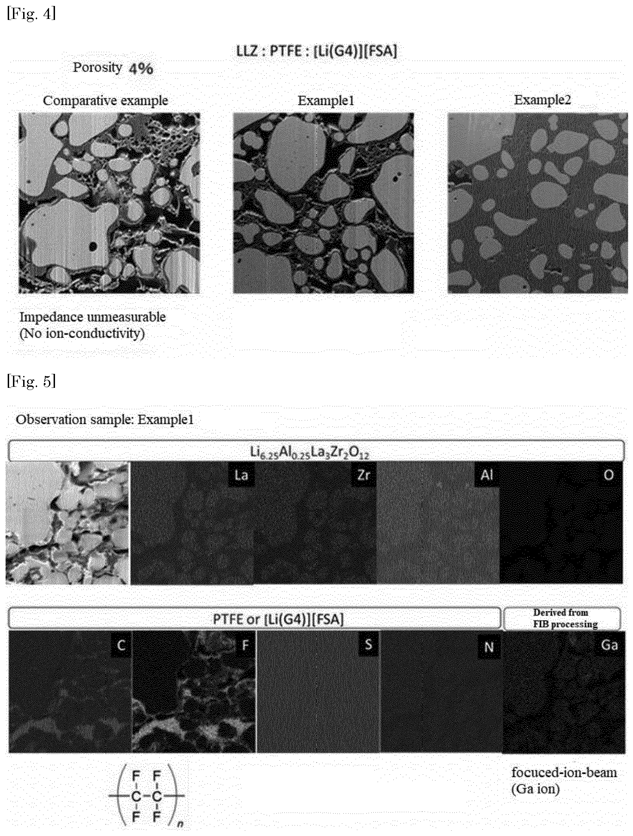

Cross sections of the electrolyte films obtained in Examples 1 and 2 and an electrolyte film for comparison were observed by FIB-SEM, to assess the state in which the various components were present. The results are illustrated in Fig. 4.

As the results of Fig. 4 reveal, it is found that in Examples 1 and 2, in particular in Example 2, in which the content of ionic liquid was larger, the binder and the ionic liquid are in a composited state with each other; a state is thus brought about that is clearly different from a case where just the binder is present (comparison target).

### [Mapping using energy dispersive X-ray spectrometer (EDS)]

The binder and ionic liquid in the electrolyte film of Example 1 were identified by EDS mapping. The results are illustrated in Fig. 5. For instance the electrolyte powder could be identified, but not the binder or the ionic liquid.

### [Electrochemical characteristics]

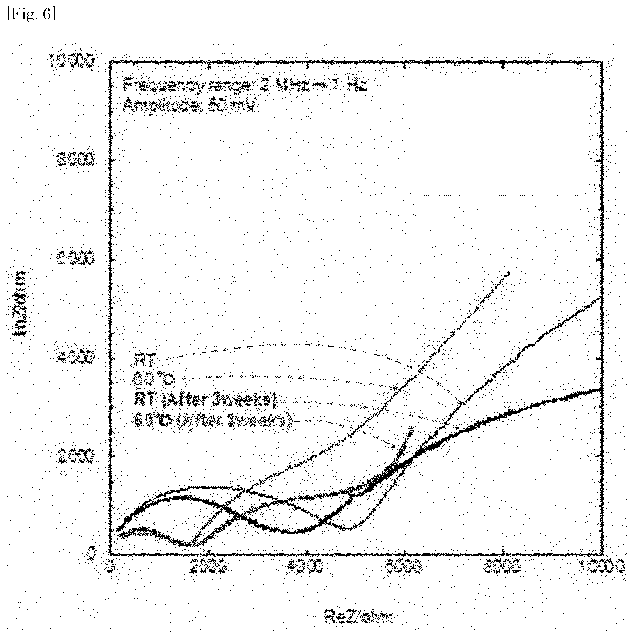

The electrochemical properties of the electrolyte film obtained in Example 3 were measured in the manner below. The results are illustrated in Fig. 6. Also the dissolution/precipitation behavior of metallic lithium was checked.

### (Electrochemical characteristics)

Using a high-performance electrochemical measurement system, product name "SP-200", by Bio-Logic SAS (France) as the measurement device, impedance was measured, as an electrochemical property, under measurement conditions that included over a frequency range of 0.1 to 3,000,000 Hz, a temperature condition of room temperature and 60°C, and applied voltage of 50 mV. The results are illustrated in Fig. 6. Ionic conductivity σ is the reciprocal of resistivity ρ and obeys the relationship σ = 1/ρ. The resistivity ρ, together with electrolyte resistance R (Ω), electrolyte thickness t (µm) and electrode area A (cm²), obeys the relationship R = ρt/A.

Also Li⁺ ion conductivity of the electrolyte film was measured, with the average thickness of the film set to 270 µm and electrode area set to 0.785 cm² (φ10 mm) . At room temperature, Li⁺ ion conductivity was initially 7.0×10⁻⁶ S cm⁻¹, and 9.4×10⁻⁶ S cm⁻¹ after three weeks, while at 60°C, Li⁺ ion conductivity was initially 2.2×10⁻⁵ S cm⁻¹, and 2.0×10⁻⁵ S cm⁻¹ after three weeks; thus virtually no drop in ion conductivity was observed.

### (Dissolution/precipitation behavior of metallic lithium)

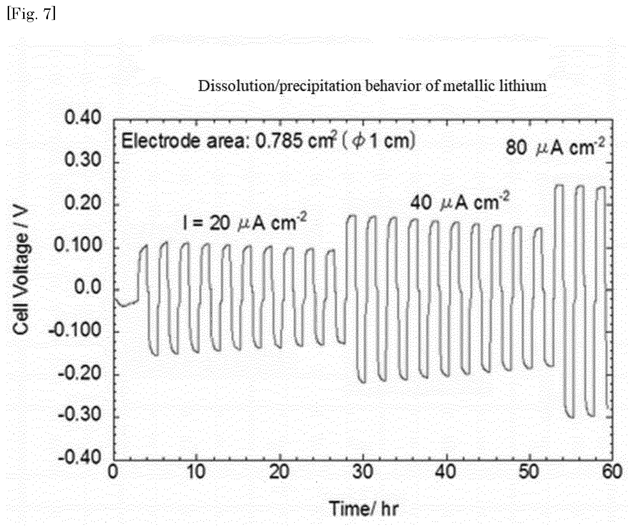

Using the electrolyte film obtained in Example 3 there was utilized a target cell having a metallic lithium foil attached thereto, at both electrodes. The electrode area was set to φ10 mm (0.785 cm²). A battery charging/discharging device, product name "HJ Series (HJ1001SD8)" by Hokuto Denko Corporation, was used as the measuring device. Current density was set to 20 µA cm⁻² at a temperature of 30°C, and an oxidation current was caused to pass for 1 hour, after which energization was discontinued for 15 minutes. Next a reduction current was caused to pass for 1 hour, after which energization was discontinued for 15 minutes. This series of operations was repeated for 10 cycles, with current density being increased to 40 µA cm⁻² and to 80 µA cm⁻², every 10 cycles, to thereby assess the dissolution/precipitation behavior of metallic lithium. The results are illustrated in Fig. 7. It was found that dissolution/precipitation of metallic lithium took place repeatedly in the target cell, without internal short-circuits. This dissolution/precipitation behavior of metallic lithium could also be observed at 60°C.

### [Battery characteristic]

Using the electrolyte film obtained in Example 3, a coating electrode (also called a coated electrode) resulting from mixing 80 parts by weight of lithium cobaltate as a positive electrode active material, 10 parts by weight of acetylene black as a conductive aid, and 10 parts by weight of polyvinylidene fluoride as a binder, was used as a positive electrode. The battery illustrated in Fig. 8(a) was then obtained using a metallic lithium foil in the negative electrode.

A battery charging/discharging device, product name "HJ Series (HJ1001SD8)" by Hokuto Denko Corporation, was used as the measuring device. The battery was charged at 60°C for 10 hours at a rate of 0.1 C (actual current: 85 µA, current density of 13.7 mA/g referred to the active material weight of the positive electrode), an open circuit state was held for 1 hour, and thereafter the battery was discharged until reaching 1.5 V. The results are illustrated in Fig. 8(b). The open circuit voltage (OCV) immediately prior to initial charging was 1.6 V. The battery characteristic was observed with an initial discharge capacity of 100 mAh/g. It was found that cell voltage dropped during charge and discharge in the second cycle. This can be ostensibly ascribed to the generation of a conductive polymer and the rise in negative electrode potential caused by contact of PTFE in the electrolyte with metallic Li in the negative electrode.

### [Production and characteristics of air battery]

A mixture was obtained by mixing 65 parts by weight of acetylene black (AB), 26.25 parts by weight of carboxymethyl cellulose (CMC) and 8.75 parts by weight of styrene-butadiene rubber (SBR), and then 100 parts by weight of water and 487.5 parts by weight of an ionic liquid N,N-diethyl-N-(2-methoxyethyl)-N-methylammonium bis(trifluoromethanesulfonyl)imide (LiTFSA/IL) containing 1 mol kg⁻¹ of LiTFSA were added to the obtained mixture, to yield a cathode slurry.

The obtained cathode slurry was applied on a disk-shaped solid electrolyte film (electrolyte film containing 60 parts by weight of Li_{0.35}La_{0.55}TiO₃ (LLT), 20 parts by weight of the polymer poly(vinylidene fluoride-co-hexafluoropropylene) (PVdF-HFP) and 20 parts by weight of LiTFSA/IL) to a thickness of 50 µm, followed by suction drying at 50°C for 12 hours, to produce a composite electrolyte film having a cathode for air batteries.

A lithium metal foil and a copper foil were sequentially disposed on the composite electrolyte film, on the side opposite that where the cathode was formed, to form an anode for air batteries. The composite electrolyte film on which the cathode and the anode had been thus formed was then sealed with a laminate film having aluminum vapor-deposited thereon, to yield an air battery. Sealing was carried out so that only the cathode was exposed to oxygen. The obtained air battery was placed in a container having oxygen injected thereinto, and was operated as an air battery.

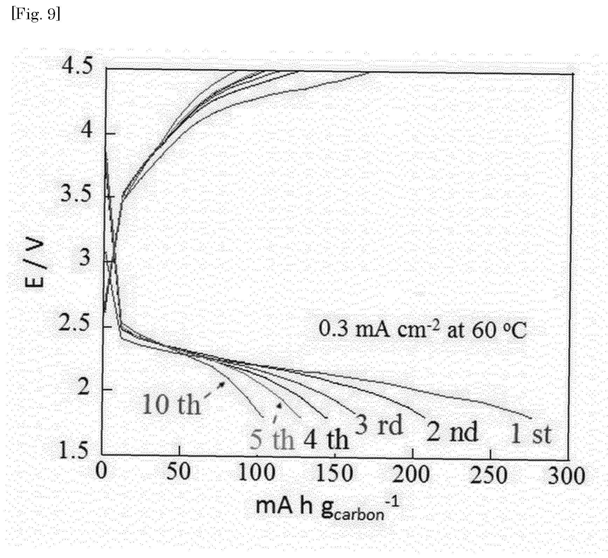

The battery characteristic of the obtained battery was checked in the same way as the above battery characteristic. The results are illustrated in Fig. 9.

### [Reference]

There were compared a SEM photograph of an electrolyte film (electrolyte film formed using polyacrylonitrile as a binder, at a mixing ratio thereof set to 3 parts by weight, and in which the particle size of the electrolyte powder was smaller than 0.1 µm) disclosed in Japanese Patent Application Publication No. 2017-59536, and a SEM photograph of the electrolyte film obtained in Example 3. The comparison revealed that formation of a composite material such as that of the electrolyte film of the present invention could not be observed in the electrolyte film described in the above patent document.

### [Examples 4 to 6]

Respective mixtures was produced using an LLZ powder (cubic particles, median size D₅₀ = 11 µm, product name "DLZ-3", by Daiichi Kigenso Kagaku Kogyo Co., Ltd.), a dispersant-containing styrenic elastomer binder solution (solution resulting from mixing "U-507" by Chukyo Yushi Co., Ltd. and a fatty acid-based dispersant at a ratio by weight of 97:3), and toluene as a solvent. The ratios of the components contained were set to LLZ powder:styrenic elastomer binder solution:toluene = 30:5.16:8.07 (Example 4), to 30:6.24:8.50 (Example 5), and to 30:8.15:9.00 (Example 6), in ratio by weight. The foregoing were stirred for 10 minutes at a rotational speed of 2000 rpm, under atmospheric pressure, using a rotating/revolving mixer "ARV-310" by Thinky Corporation, followed by vacuum degassing at a pressure of 10 kPa for 5 minutes, to yield respective slurries. Each obtained slurry was applied onto a film with release agent, was dried in the atmosphere at 30°C for 1 hour, followed by 6 hours of drying at 80°C in a vacuum dryer, to yield an LLZ sheet. After drying of the LLZ sheet, the film with release agent was stripped off, the sheet was punched to φ20 mm, was wrapped in a PTFE sheet, was placed in a 10-inch balloon, was vacuum-sealed, and was thereafter pressed at 300 MPa using a hydrostatic press "NT Wave CIP" by NPa System Co., Ltd. The LLZ sheet pressed in an Ar gas atmosphere was immersed in a solvated ionic liquid [LiG4][FSA], with [LiG4][FSA] being introduced into the LLZ sheet through vacuum impregnation, to yield a respective electrolyte film having LLZ powder:styrenic elastomer binder:ionic liquid (ratio by weight) = 77:13:10 (Example 4), 75:16:9 (Example 5) and 71:19:10 (Example 6).

### [Example 7 and Reference example 2]

### (Samples with modified solvated ionic liquid ratio)

The ratios of the components contained were set to LLZ powder:styrenic elastomer binder solution:toluene = 30:2.15:7.00 (Example 7), and 30:8.07:9.00 (Reference example 2), and electrolyte films were obtained with LLZ powder:styrenic elastomer binder:ionic liquid (ratio by weight) = 75:5:20 (Example 7) and 59:16:25 (Reference example 2), in the same way as in Example 4, except that herein vacuum impregnation was carried out without hydrostatic pressing.

### [Reference examples]

### (Comparison of particle size)

Herein a LLZ powder (median size D50 = 1 µm, by SCHOOT AG) and DLZ-3 were pelletized and were subjected to a sintering treatment at 1140°C for 20 hours, followed by crushing, to produce a composition and an electrolyte film in the same way as in Example 2, using a powder that failed to pass through a sieve upon sifting at a mesh opening of 46 µm (i.e. powder estimated to have a median size of D₅₀ = 46 µm or greater). Then a DSC measurement and an NMR measurement were carried out, in the same way as in Example 2, on the obtained electrolyte film. The NMR measurement was carried out in accordance with an ordinary method using product name "JNM-ECS300" by JEOL Ltd.

### (Electrochemical characteristics)

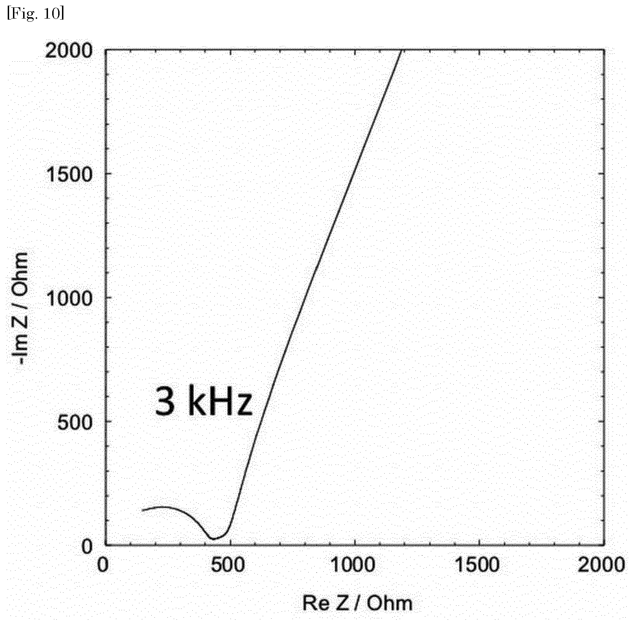

Using a high-performance electrochemical measurement system, product name "SP-200", by Bio-Logic SAS (France), impedance was measured, as an electrochemical property, under measurement conditions that included a frequency range of 0.1 to 3,000,000 Hz, a temperature condition of room temperature and 60°C, and applied voltage of 50 mV, using the electrolyte film obtained in Example 4. The results are illustrated in Fig. 10. Ionic conductivity σ is the reciprocal of resistivity ρ and obeys the relationship σ = 1/ρ. The resistivity ρ, together with electrolyte resistance R (Ω), electrolyte thickness t (µm) and electrode area A (cm²), obeys the relationship R = ρt/A.

Also Li⁺ ion conductivity of the electrolyte film was measured, with the average thickness of the film set to 450 µm and electrode area set to 0.785 cm² (φ10 mm). The result was 1.3×10⁻⁴ S cm⁻¹ at room temperature.

### (Dissolution/precipitation behavior of metallic lithium)

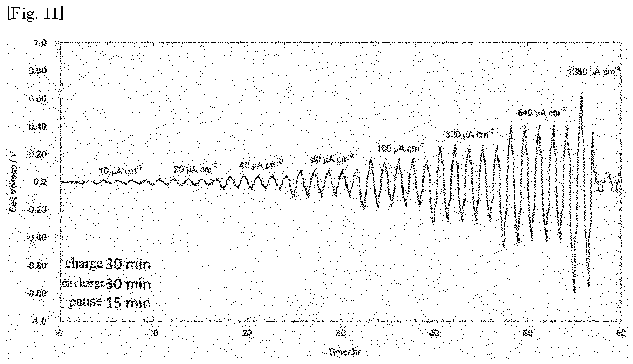

Using the electrolyte film obtained in Example 4 there was constructed a target cell having a metallic lithium foil attached thereto at both electrodes. The electrode area was set to φ10 mm (0.785 cm²). A battery charging/discharging device, product name "HJ Series (HJ1001SD8)" by Hokuto Denko Corporation, was used as the measuring device. Current density was set to 10 µA cm⁻² at a temperature of 60°C, and an oxidation current was caused to pass for 30 minutes, after which energization was discontinued for 15 minutes, and then a reduction current was caused to pass for 30 minutes, after which energization was discontinued for 15 minutes. This series of operations was repeated for 10 cycles, with current density being increased to 20 µA cm⁻², 40 µA cm⁻², 80 µA cm⁻², 160 µA cm⁻², 320 µA cm⁻², 640 µA cm⁻² and to 1280 µA cm⁻², every 10 cycles, to thereby assess the dissolution/precipitation behavior of metallic lithium. The results are illustrated in Fig. 11. It was found that dissolution/precipitation of metallic lithium took place repeatedly in the target cell, without internal short-circuits, until energization at 1280 µA cm⁻². This dissolution/precipitation behavior of metallic lithium could also be observed at 60°C.

### [Battery characteristic]

Using the electrolyte film obtained in Example 4, a coating electrode (also called a coated electrode) resulting from mixing 92 parts by weight of lithium cobaltate as a positive electrode active material, 4 parts by weight of acetylene black as a conductive aid, 4 parts by weight of polyvinylidene fluoride as a binder, and 10 parts by weight of an ionic liquid, namely 1 mol dm⁻³ of LiFSA/EMITFSA, was used in the positive electrode. The battery illustrated in Fig. 8(a) was then obtained using a metallic lithium foil in the negative electrode.

A battery charging/discharging device, product name "HJ Series (HJ1001SD8)" by Hokuto Denko Corporation, was used as the measuring device. The battery was repeatedly charged and discharged at 60°C at a rate of 0.1 C (actual current: 26 µA, current density of 13.7 mA/g referred to the active material weight of the positive electrode), and at a rate of 0.02 C (actual current: 21 µA, current density of 2.74 mA/g referred to the active material weight of the positive electrode).

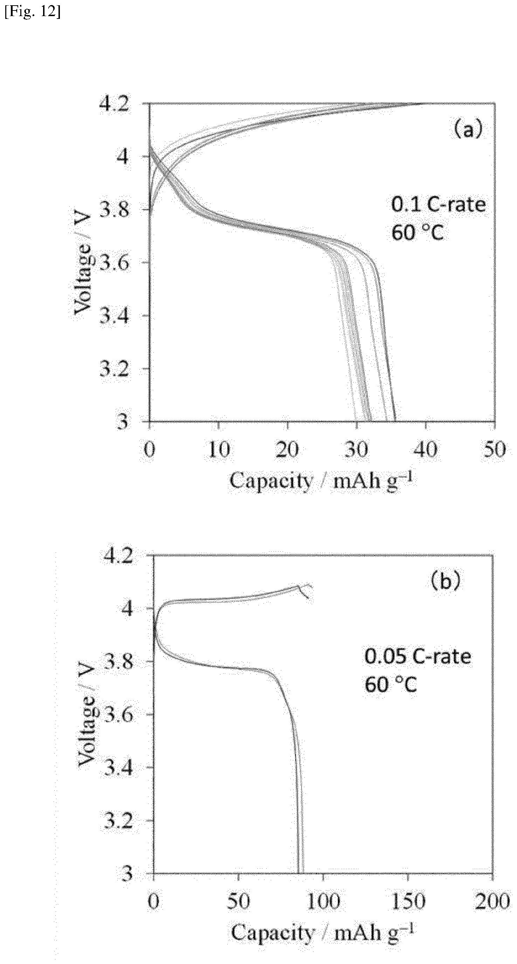

Charge and discharge were observed within a range of 3.0 V to 4.2 V at a 0.1 C rate, and discharge capacity was 30 mAh g⁻¹ (Fig. 12(a)). Charge and discharge were possible within a range of 3.0 V to 4.1 V, at a 0.05 C rate, and 30 mAh g⁻¹ discharge capacity was observed (Fig. 12(b)).

In the production of cells for impedance measurement and for a metallic lithium dissolution precipitation test, the Au film was attached to both faces of the green sheet, on the negative electrode side and the positive electrode side, but in the case of production of a cell for battery testing the Au film was attached to only the negative electrode side.

### [DSC and NMR]

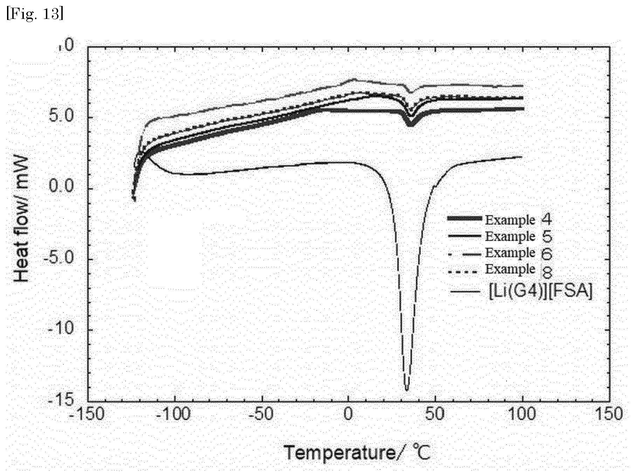

The electrolyte films obtained in Examples 4 to 8 were subjected to DSC and NMR measurements in the same way as in Example 1. The NMR measurement was carried out in accordance with an ordinary method using product name "JNM-ECS300" by JEOL Ltd. In the DSC measurement, a peak derived from the melting point of the solvated ionic liquid in the data on the electrolyte film proved to be somewhat weaker in mixing ratio to the amount contained (Fig. 13). That is ostensibly because a small amount of solvated ionic liquid was adhered to the electrolyte surface, since peak size did not change regardless of the solvated ionic liquid ratio in the electrolyte film. A conceivable underlying cause of the adhesion of the ionic liquid to the electrolyte surface is that the electrolyte films were produced in accordance with a method that involved introducing the ionic liquid into the film by vacuum impregnation.

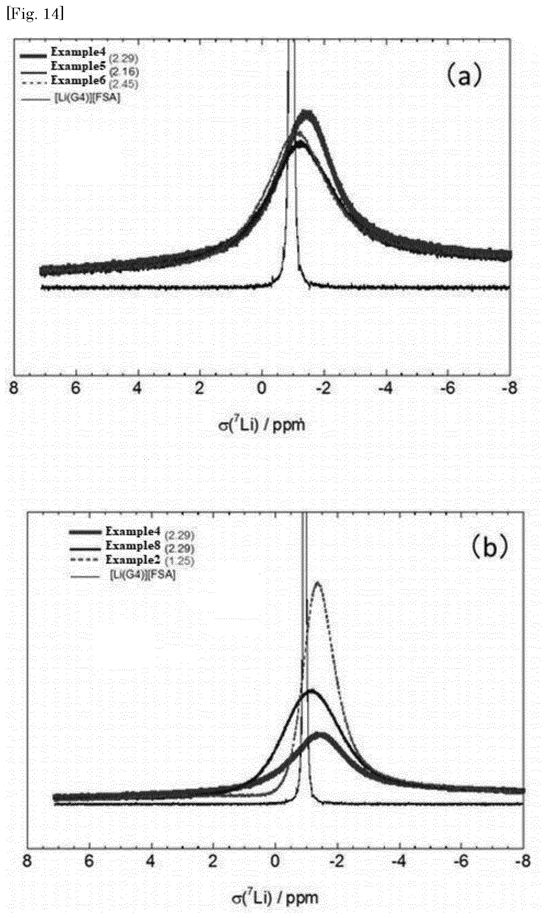

Figs. 14(a) and 14(b) illustrate NMR measurement results. As illustrated in Figs. 14(a) and 14(b), in Examples 4 to 7 and Reference example 2 the 7Li⁺ peak of the electrolyte film is further shifted towards the high magnetic field side than the peak of the solvated ionic liquid. That is ostensibly because in a case where a styrenic elastomer binder is used the Li⁺ ions in the electrolyte film are in a state of having had electrons donated thereto. The half width (FWHM) was worked out from the NMR peaks, for the purpose of comparison, concerning a change of state derived from compositing of the electrolyte films in Examples 4 to 7 and Reference example 2. The half width was worked out by measuring the height h of the peak top from the base line, and measuring the peak width for a value of h/2. The larger the half width, the broader the peak is, which signifies a small number of free solvated ionic liquids not involved in compositing. In particular, the results suggest that in the electrolyte film of Reference example 2, the solvated ionic liquid ratio in the electrolyte film is higher, and the number of free solvated ions larger, than those in other Examples. The above indicates that in the electrolyte film of the present invention, in particular an electrolyte film (electrolyte films of Examples 4 to 6) lying in the above-described preferred ranges of mixing ratios, a state is brought about in which the ionic liquid is not present as-is, but is present in the vicinity of the electrolyte powder in a state of being composited with the binder, as a result of which the electrolyte film has new conduction paths, unlike conventional electrolytes. Preferably, the half width of the electrolyte film of the present invention is 1.25 ppm or larger. In Fig. 14(a) the ⁷Li peak was corrected with 0 ppm set to the peak of 1 M LiCl/D₂O. The numerals in brackets in Fig. 14(a) denote half width.

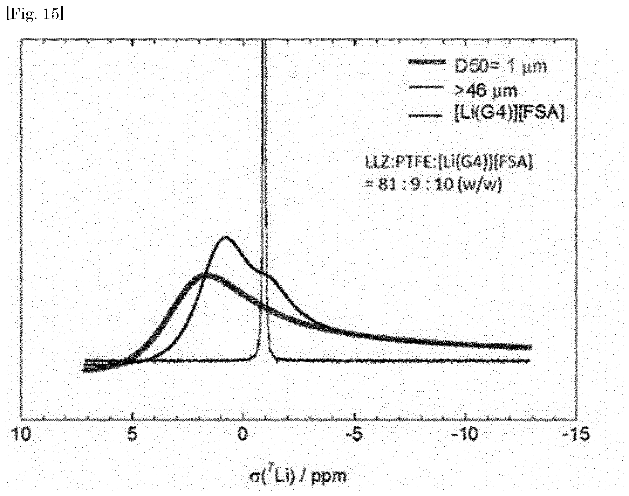

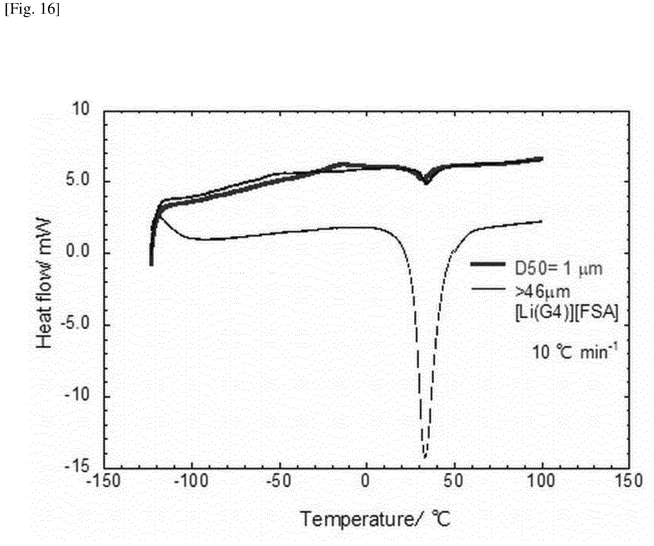

Figs. 15 and 16 illustrate DSC data and NMR data of an electrolyte film illustrated as a reference example. Through compositing with the PTFE binder, the peak of the electrolyte film shifted further towards a low magnetic field side than the peak of the solvated ionic liquid. Also, a 7Li⁺ peak was observed in the vicinity of 1 ppm and -1 ppm, in an electrolyte film produced using 46 µm particles or larger. It is considered that in the case of large particle size there are not sufficient interactions, on account of the small surface area, and there remains solvated ionic liquid the state of which is unchanged.

## Claims

1. An electrolyte composition comprising:
an electrolyte powder;
a binder; and
an ion-conductive material,
wherein said electrolyte powder is an oxide-based ceramic electrolyte powder,
said binder is a polymer compound that is stable towards metal ions, and
said ion-conductive material is a solvated ion-conductive material or an ion-conductive solution including a metal ion compound.

2. The electrolyte composition according to Claim 1,
wherein said electrolyte powder, said binder and said ion-conductive material are contained in mixing ratios of 60 to 95 parts by weight of said electrolyte powder, 4 to 35 parts by weight of said binder, and 1 to 20 parts by weight of said ion-conductive material, for a total of 100 parts by weight.

3. The electrolyte composition according to Claim 1,
wherein said electrolyte powder, said binder and said ion-conductive material are contained in mixing ratios of 70 to 90 parts by weight of said electrolyte powder, 5 to 20 parts by weight of said binder, and 3 to 15 parts by weight of said ion-conductive material (total 100 parts by weight), for a total of 100 parts by weight.

4. The electrolyte composition according to Claim 1,
wherein said electrolyte powder is a garnet-type lithium ion conductive ceramic or a perovskite-type lithium ion conductive ceramic, and has an average the particle size (median size D₅₀) of 0.1 to 20 µm.

5. The electrolyte composition according to Claim 1,
wherein when said electrolyte composition is mixed,
a composite material of said binder and said ion-conductive material is formed between the particles of the electrolyte powder,
a melting point peak derived from the ion-conductive material disappears in a differential scanning calorimeter (DSC), and
in NMR, peaks specific to the ion-conductive material for ⁷Li and ¹H shift towards a high magnetic field side with increasing content of the ion-conductive material.

6. The electrolyte composition according to Claim 1,
wherein in a mixture resulting from mixing said electrolyte composition,
a composite material of said binder and said ion-conductive material is formed between the particles of the electrolyte powder, and
said mixture has a conductivity of 10⁻⁶ S cm⁻¹ or higher, as measured in accordance with a conductivity measurement procedure below:
a φ10 mm (0.785 cm²) Au collector is formed through sputtering on both faces of a composite electrolyte sheet, a resistance of the composite is measured in accordance with an AC impedance method in an argon atmosphere, and ion conductivity is calculated on the basis of a thickness of the sheet and an area of the Au collector; ionic conductivity σ is a reciprocal of resistivity ρ and obeys a relationship σ = 1/ρ; the resistivity ρ, together with electrolyte resistance R (Ω), electrolyte thickness t (µm) and electrode area A (cm²), obeys a relationship R = ρt/A.

7. An electrolyte film, formed using the electrolyte composition of any one of Claims 1 to 6, comprising
an electrolyte powder and a composite material resulting from compositing a binder and an ion-conductive material.

8. The electrolyte film according to Claim 7, wherein said composite material is present being mixed with said electrolyte powder throughout a thickness direction of the electrolyte film.

9. A battery comprising the electrolyte film according to Claim 7 or Claim 8.
